# EUROPEAN PATENT APPLICATION

(11) **EP 1 328 086 A1**
(43) Date of publication of application: **16.07.2003**
(21) Application number: 01932288.2
(22) Date of filing: 28.05.2001
(51) Int. Cl.: H04L 12/28

(54) **COMMUNICATION APPARATUS, COMMUNICATION SYSTEM AND COMMUNICATION METHOD**

(30) Priority: 16.10.2000 JP 2000315395
(71) Applicant: Link Evolution Co., Ltd., Setagaya-ku, Tokyo 156-0043 (JP)
(72) Inventor: KITAZUMI, Gontaro, LINK EVOLUTION CO., LTD, Setagaya-ku, Tokyo 156-0043 (JP)
(74) Representative: Ajello, Michael John
(86) International application number: JP0104441
(87) International publication number: WO02033905

(57) **Abstract**

A communication apparatus including a first communication section for transmitting and receiving a radio signal; a second communication section for transmitting and receiving a signal according to a transmission method different from the first communication section; a key information holding section for holding encryption key information; a key information transmission control section for transmitting the encryption key information held in the key information holding section to another communication apparatus by the second communication section; and a communication control section for encrypting information on a basis of the encryption key information held in the key information holding section and for transmitting the information by the first communication section. In case of transmitting and receiving data according to radio communication among a plurality of electronic devices, security reliability can be improved without damaging convenience of radio communication.

## Description

### Technical field

The present invention relates to a communication apparatus responsive to a plurality of different transmission methods, a communication system comprising this communication apparatus, and a communication method in this communication system.

### Background Art

In earlier technology, in case of executing data communication among electronic devices, such as personal computers, PDA (Personal Digital Assistant), portable telephones and the like, a technique such that the electric devices are mutually connected with a cable is used. However, the technique of using the cable is troublesome to connect the cable to the electronic devices and is inconvenient since it is required to carry the cable. Then, recently, a radio communication technique has been used in data communication among a plurality of electronic devices.

In particular, in recent years, in order to improve the convenience of electronic devices, a plurality of radio communication standards rich in compatibility have been established. When communication apparatuses conforming to these communication standards are used, data communication among various electronic devices can be executed easily.

However, in case of executing data communication by using a radio communication technique, it is required to be careful in data leakage. In particular, in case that the communication devices conform to a communication standard capable of communicating among various devices, it is required to be careful not to make the data be received by other irrelevant devices by mistake. Thus, in data communication using the radio communication technique, it is an object to improve the security reliability.

An object of the present invention is to improve the security reliability without damaging the convenience of radio communication when transmitting and receiving data among a plurality of electronic devices according to radio communication.

### Disclosure of the Invention

In order to solve such problems, the present invention comprises the following features. Here, in the explanation of the sections shown in the following, the structure corresponding to the embodiments will be shown as an example in parentheses. The numerals and the like are the later-described reference numerals and the like in the drawings.

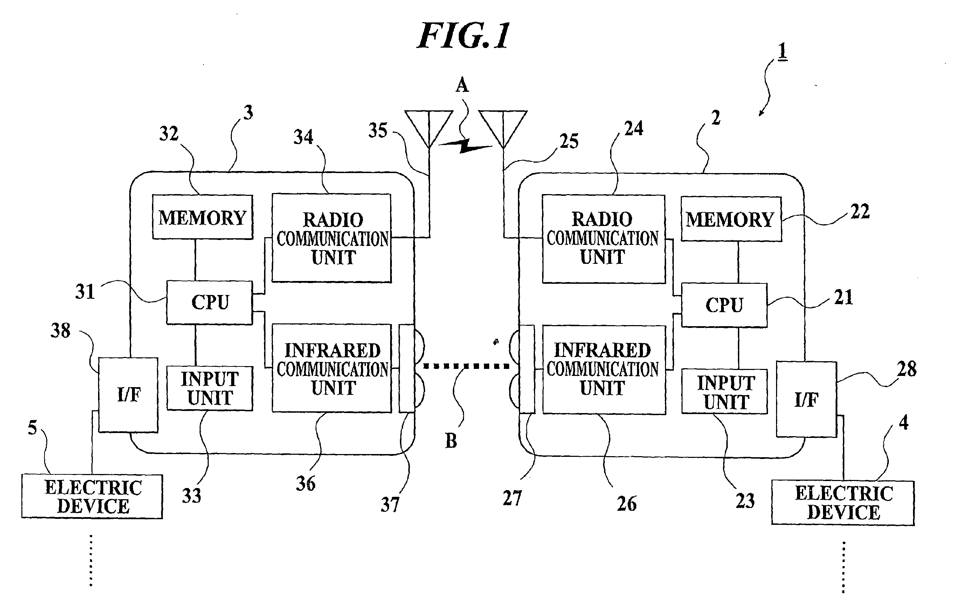

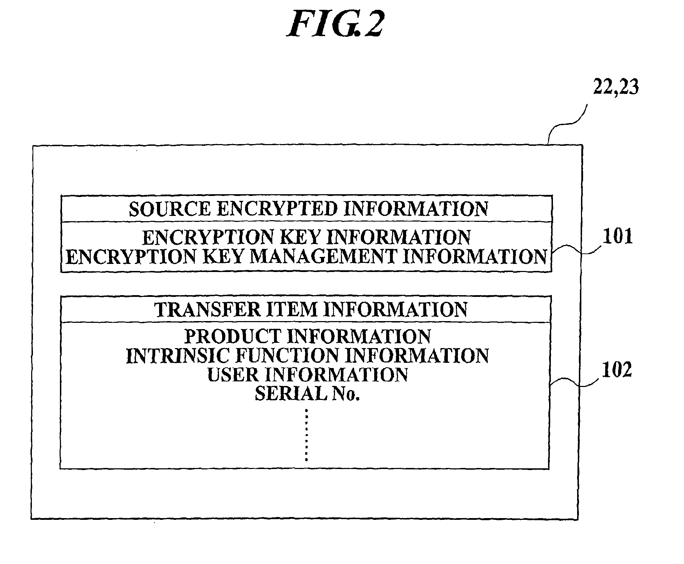

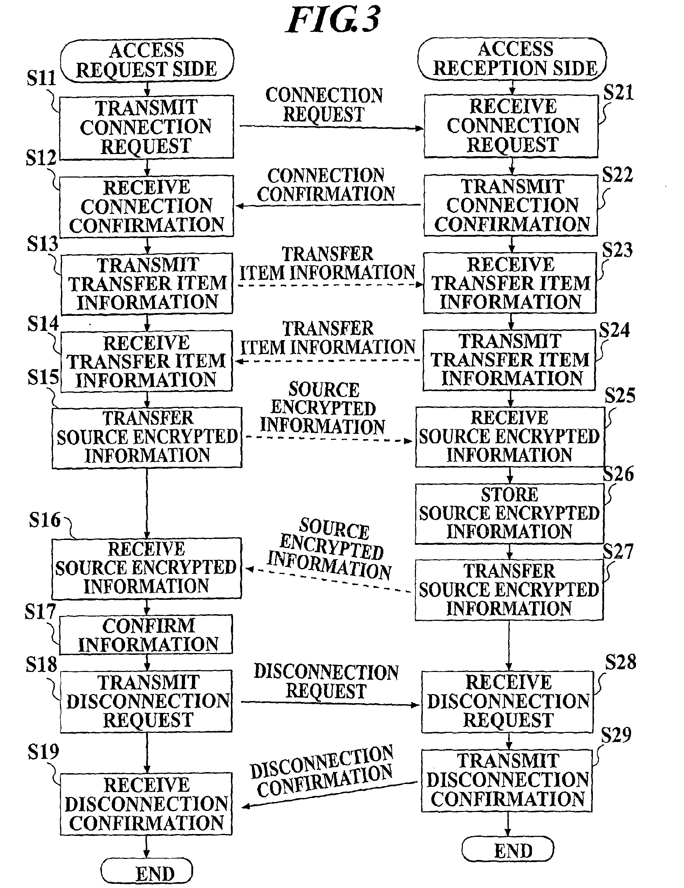

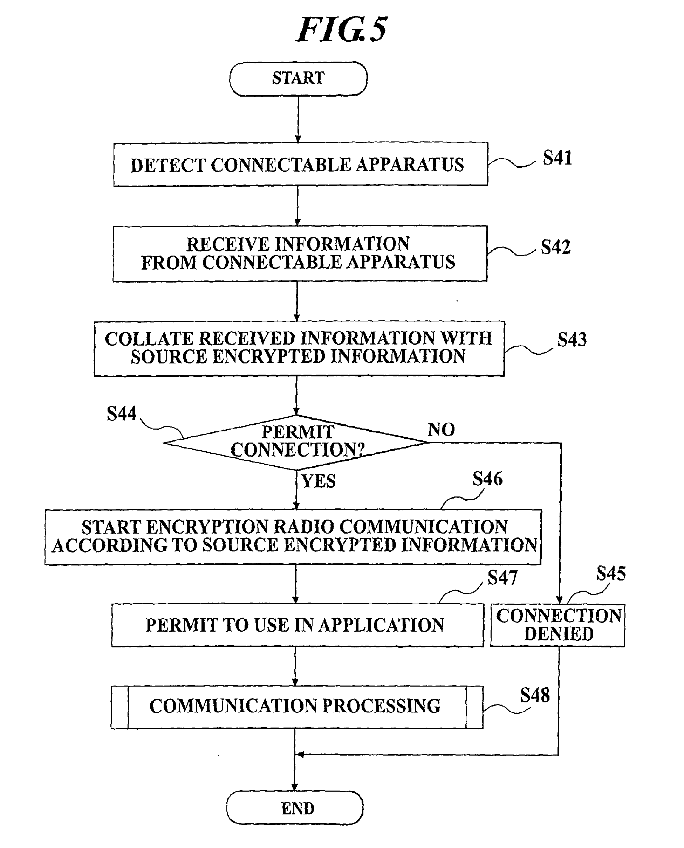

According to a first aspect of the present invention, the communication apparatus (2) comprises:
a first communication section (for example, the radio communication unit 24 shown in FIG. 1) for transmitting and receiving a radio signal;
a second communication section(for example, the infrared communication unit 26 shown in FIG. 1) for transmitting and receiving a signal according to a transmission method different from the first communication section;
a key information holding section (for example, the memory 22 having the source encrypted information storage area 101 shown in FIG. 2) for holding encryption key information;
a key information transmission control section (for example, the CPU 21 for executing the processing shown in FIG. 3) for transmitting the encryption key information held in the key information holding section to another communication apparatus by the second communication section; and
a communication control section (for example, the CPU 21 for executing the processing shown in FIG. 5) for encrypting information on a basis of the encryption key information held in the key information holding section and for transmitting the information by the first communication section.

According to the communication apparatus of the present invention comprising such a structure, the communication apparatus comprises the first communication section for transmitting and receiving a radio signal, and the second communication section for transmitting and receiving a signal according to a transmission method different from the first communication section. Encryption key information is held by the key information holding section, and the encryption key information held in the key information holding section is transmitted to another communication apparatus by the second communication section according to the control of the key information transmission control section. Moreover, information is encrypted on the basis of the encryption key information held in the key information holding section according to the control of the communication control section, and the information is transmitted by the first communication section. Therefore, the information transmitted by the communication apparatus can be received only by the communication apparatus which has received the encryption key information transmitted by the second communication section. Thereby, security reliability can be ensured with respect to radio communication by the first communication section. In particular, in case that the radio communication by the first communication section conforms to a radio communication method whose specs and standard are disclosed or which is widely spread and its compatibility is retained, for example, the Bluetooth standard, possibility such that the information will be received by an irrelevant communication apparatus cannot be denied. However, if the present invention is applied, the opponent of communication can be limited only to the communication apparatus which has received the encryption key information transmitted by the second communication section. Accordingly, confidentiality of the information can be kept without damaging the convenience of radio communication, such as the positional relation with the apparatus of communication opponent being comparatively free or the like, and the security reliability can be ensured.

In the communication apparatus of the present invention, preferably, the communication apparatus further comprises a communication denying section (for example, the CPU 21 for executing the processing shown in Step S45 in FIG. 5) for denying the transmission and reception of the radio signal by the first communication section to an external communication apparatus which does not hold encryption key information same as the encryption key information held in the key information holding section.

According to the communication apparatus of such a structure, since the transmission and reception of the radio signal by the first communication section are denied by the communication denying section to an external communication apparatus which does not hold encryption key information same as the encryption key information held in the key information holding section, the communication apparatus to become the opponent of communication can be limited strictly, and the secret of information can be kept more certainly.

Further, in the above-described communication apparatus, the first communication section may be for transmitting and receiving the radio signal according to a transmission method conforming to a Bluetooth standard, and the second communication section may be for transmitting and receiving the radio signal according to a transmission method using an infrared signal.

According to the communication apparatus of such a structure, since the first communication section is for transmitting and receiving the radio signal according to a transmission method conforming to the Bluetooth standard, and the second communication section is for transmitting and receiving the radio signal according to a transmission method using an infrared signal, confidentiality of information can be kept in the radio communication in the Bluetooth standard whose specs are disclosed widely and which is rich in convenience, on the other hand, which is difficult to keep information secret certainly. In particular, since the transmission method using an infrared signal is utilized in the second communication section, miniaturization, lightening, lowering cost and power-saving of the second communication section are possible, so that it is easily realizable. Further, in the transmission method using an infrared signal, since it is required that the communication apparatuses come close to each other and face within a predetermined solid angle, the confidentiality of information can be made much higher.

According to a second aspect of the present invention, the communication system is a communication system (1) comprising a transmission side apparatus (for example, the communication apparatus 2 shown in FIG. 1) and a reception side apparatus (for example, the communication apparatus 3 shown in FIG. 1),
the transmission side apparatus comprising:
a first communication section (for example, the radio communication unit 24 shown in FIG. 1) for transmitting and receiving a radio signal;
a second communication section (for example, the infrared communication unit 26 shown in FIG. 1) for transmitting and receiving a signal according to a transmission method different from the first communication section;
a key information holding section (for example, the memory 22 having the source encrypted information storage area 101 shown in FIG. 2) for holding encryption key information;
a key information transmission control section (for example, the CPU 21 for executing the processing shown in FIG. 3(a)) for transmitting the encryption key information held in the key information holding section to another communication apparatus by the second communication section; and
a communication control section (for example, the CPU 21 for executing the processing shown in FIG. 5) for encrypting information on a basis of the encryption key information held in the key information holding section and for transmitting the information to the reception side apparatus by the first communication section,
the reception side apparatus comprising:
a key information receiving section (for example, the infrared communication unit 36 shown in FIG. 1, and the CPU 31 for executing the processing shown in FIG. 3(b)) for receiving the encryption key information transmitted by the second communication section provided in the transmission side apparatus;
a received key information holding section (for example, the memory 32 shown in FIG. 1) for holding the encryption key information received by the key information receiving section; and
an encrypted information receiving section (for example, the radio communication unit 34 shown in FIG. 1) for receiving the information transmitted by the first communication section provided in the transmission side apparatus.

According to the communication system of the present invention comprising such a structure, the communication system comprising a transmission side apparatus and a reception side apparatus, the transmission side apparatus comprising: a first communication section for transmitting and receiving a radio signal; and a second communication section for transmitting and receiving a signal according to a transmission method different from the first communication section. Encryption key information is held by the key information holding section, and the encryption key information held in the key information holding section is transmitted to the reception side apparatus by the second communication section according to the key information transmission control section for transmitting. Moreover, information is encrypted on the basis of the encryption key information held in the key information holding section and transmitted to the reception side apparatus by the first communication section according to the control of the communication control section. The reception side apparatus receives the encryption key information transmitted by the second communication section provided in the transmission side apparatus, holds the encryption key information received by the key information receiving section according to the received key information holding section, and receives the information transmitted by the first communication section provided in the transmission side apparatus by the encrypted information receiving section.

Further, according to a third aspect of the present invention, the communication method is a communication method in a communication system (1) comprising: a transmission side apparatus (for example, the communication apparatus 2 shown in FIG. 1) having a first communication section (for example, the radio communication unit 24 shown in FIG. 1) for transmitting and receiving a radio signal, and a second communication section (for example, the infrared communication unit 26 shown in FIG. 1) for transmitting and receiving a signal according to a transmission method different from the first communication section; and a reception side apparatus (for example, the communication apparatus 3 shown in FIG. 1), comprising:
transmitting encryption key information to the reception side apparatus by the second communication section, according to the transmission side apparatus;
receiving and storing the encryption key information transmitted by the second communication section provided in the transmission side apparatus, according to the reception side apparatus; and
   encrypting information on a basis of the encryption key information and transmitting the information to the reception side apparatus by the first communication section, according to the transmission side apparatus.

Therefore, according to the communication method, the information transmitted by the transmission side apparatus can be received only by the reception side apparatus. Thereby, security reliability can be ensured with respect to radio communication in the communication system using the first communication section provided in the transmission side apparatus. In particular, in case that the radio communication by the first communication section conforms to a radio communication method whose specs and standard are disclosed or which is widely spread and its compatibility is retained, for example, the Bluetooth standard, possibility such that the information will be received by an irrelevant communication apparatus cannot be denied. However, if the present invention is applied, the opponent of communication can be limited only to the reception side apparatus which holds the encryption key information transmitted by the second communication section. Accordingly, confidentiality of the information can be kept without damaging the convenience of radio communication, such as the positional relation with the apparatus of communication opponent being comparatively free or the like, and the security reliability can be ensured.

In the above-described communication system or in the above-described communication method,
the transmission side apparatus may further comprise a communication denying section (for example, the CPU 21 for executing the processing shown in Step S45 in FIG. 5) for denying the transmission and reception of the radio signal by the first communication section when encryption key information same as the encryption key information held in the key information holding section is not held in the received key information holding section provided in the reception side apparatus.

According to such a structure, since the transmission side apparatus denies the transmission and reception of the radio signal by the first communication section according to the communication denying section when encryption key information same as the encryption key information held in the key information holding section is not held in the received key information holding section provided in the reception side apparatus, the communication apparatus to become the opponent of communication can be limited more strictly, and the secret of information can be kept more certainly.

Further, in the above-described communication system or in the above-described communication method,
the first communication section provided in the transmission side apparatus and the encrypted information receiving section provided in the reception side apparatus may be for transmitting and receiving the radio signal according to a transmission method conforming to a Bluetooth standard, and
the second communication section provided in the transmission side apparatus and the key information receiving section provided in the reception side apparatus may be for transmitting and receiving the radio signal according to a transmission method using an infrared signal.

As above, since the first communication section provided in the transmission side apparatus and the encrypted information receiving section provided in the reception side apparatus are for transmitting and receiving the radio signal according to a transmission method conforming to the Bluetooth standard, and the second communication section provided in the transmission side apparatus and the key information receiving section provided in the reception side apparatus are for transmitting and receiving the radio signal according to a transmission method using an infrared signal, confidentiality of information can be kept in the radio communication according to the Bluetooth standard whose specs are disclosed widely and which is rich in convenience, on the other hand, which is difficult to keep information secret certainly. In particular, since the transmission method using an infrared signal is utilized in the second communication section and the key information receiving section, miniaturization, lightening, lowering cost and power-saving of the second communication section and the key information receiving section are possible, so that it is easily realizable. Further, in the transmission method using an infrared signal, since it is required that the transmission side apparatus and the reception side apparatus come close to each other and face within a predetermined solid angle, the confidentiality of information can be made much higher.

Further, the key information transmission control section provided in the transmission side apparatus may encrypt and transmit the encryption key information by the second communication section.

By doing this, since the key information transmission control section provided in the transmission side apparatus encrypts and transmits the encryption key information by the second communication section, leakage of information when transmitting the encryption key information can be prevented more certainly. Thereby, security reliability can be made much higher.

### Brief Description of Drawings

FIG. 1 is a block diagram showing a structure of a communication system 1 in a first embodiment to which the present invention is applied;
FIG. 2 is a view schematically showing an inner structure of memories 22 and 23 in FIG. 1;
FIG. 3 is a flowchart showing an operation of a communication apparatus 2 and a communication apparatus 3 in FIG. 1;
FIGS. 4A and 4B are explanatory views showing a protocol structure in case of executing encryption to a processing shown in FIG. 3, wherein FIG. 4A is a hierarchical model showing the protocol structure in infrared communication when executing encryption, and FIG. 4B schematically shows a structure of data unit in the infrared communication;
FIG. 5 is a flowchart showing an operation in case of executing radio communication conforming to the Bluetooth standard by the communication apparatus 2 in FIG. 1;
FIG. 6 is a block diagram showing a structure of a communication system 10 in a second embodiment to which the present invention is applied; and
FIG. 7 is a view schematically showing an inner structure of a memory 61 shown in FIG. 6.

### Best Mode for Carrying Out the Invention

Hereinafter, embodiments of the present invention will be explained in detail with reference to the drawings.

### First Embodiment:

FIG. 1 is a block diagram showing a structure of a communication system 1 as a first embodiment to which the present invention is applied. As shown in FIG. 1, the communication system 1 comprises a communication apparatus 2 and a communication apparatus 3 that are capable of communicating with each other. Between the communication apparatus 2 and the communication apparatus 3, a radio communication link A in which radio waves are used as media, and an infrared communication link B utilizing infrared rays are formed.

In addition, both the communication apparatus 2 and the communication apparatus 3 shown in FIG. 1 are the communication apparatuses having the same structure. However, in the first embodiment, the communication apparatus 2 is explained as an access request side apparatus, and the communication apparatus 3 is explained as an access reception side apparatus.

The communication apparatus 2 comprises a CPU (Central Processing Unit) 21, a memory 22, an input unit 23, a radio communication unit 24, an antenna 25, an infrared communication unit 26, an infrared ray receiving/emitting unit 27, and an interface unit 28.

The CPU 21 reads out the system program stored in the memory 22 to run the program in accordance with the indication operation in the input unit 23, and controls driving of each unit in the communication apparatus 2.

Concretely, the CPU 21 controls the radio communication unit 24 in accordance with the program in the memory 22, and establishes the radio communication link A between the communication apparatus 2 and the communication apparatus 3. Next, the CPU 21 establishes the infrared communication link B by the infrared communication unit 26 and the infrared ray receiving/emitting unit 27. Then, the CPU 21 transmits various information relating to encryption, which is stored in the memory 22, to the communication apparatus 3 through the infrared communication link B.

Thereafter, the CPU 21 receives the information transmitted from the communication apparatus 3 through the infrared communication link B, confirms the contents of the information, and disconnects the radio communication link A and the infrared communication link B between the communication apparatus 2 and the communication apparatus 3.

Further, the CPU 21 controls the radio communication unit 24 in accordance with the indication inputted from the input unit 23, and outputs a radio signal to scan a communication apparatus which exists in the vicinity of the communication apparatus 2 from the antenna 25. When a connectable communication apparatus is detected through the radio communication line according to this scanning operation, the information transmitted from the detected communication apparatus is received by the radio communication unit 24 and is analyzed.

Then, the received information is collated with source encrypted information stored in the memory 22. When the received information matches the source encrypted information, the connection is permitted, and radio communication between the detected communication apparatus is started. Further, when the received information does not match the source encrypted information, the communication between the detected communication apparatus is denied.

The memory 22 comprises a nonvolatile storage element, such as an EEPROM, a flash memory or the like. The memory 22 stores programs, such as system program and the like carried out by the CPU 21, data and the like according to these programs.

Further, the memory 22 temporarily holds the data processed by the CPU 21, data inputted from the input unit 23, and the like.

Here, the data stored in the memory 22 will be explained.

FIG. 2 is a view schematically showing the inner structure of the memory 22. In the memory 22, besides a storage area (not shown in the figure) in which the above-described various programs are stored, a source encrypted information storage area 101 and a transfer item information storage area 102 are provided, as shown in FIG. 2.

In the source encrypted information storage area 101, encryption key information which is used as a "key" at the time of encryption and encryption key management information including histories of transmitting the encryption key information to other electric devices, and the like are stored. The various information stored in the source encrypted information storage area 101 are named generically as source encrypted information.

The source encrypted information stored in the source encrypted information storage area 101 may be stored in the source encrypted information storage area 101 in advance, or may be inputted by an operation of the input unit 23 as needed.

Further, in the transfer item information storage area 102, various information, such as product information, intrinsic function information, user information, serial No. and the like, of the communication apparatus 2 are stored. These various information stored in the transfer item information storage area 102 are named generically as transfer item information.

In addition, the information stored in the transfer item information storage area 102 may be stored in the memory 22 in advance, or may be inputted by an operation of the input unit 23, or may be inputted from an electric device 4 connected to the interface unit 28.

The input unit 23 comprises input devices, such as a plurality of keys to which information capable of being inputted are assigned respectively, and generates an operation signal corresponding to operation contents to output to the CPU 21.

The radio communication unit 24 houses an encoder, decoder, RF, amplifier and the like, converts the signals inputted from the CPU 21 to generate radio signals, and transmits the radio signals to the communication apparatus 3 through the antenna 25. Further, the radio communication unit 24 receives the radio signals transmitted from the communication apparatus 3 by the antenna 25, and outputs the signals obtained by converting the received radio signals to the CPU 21.

Here, as the radio communication unit 24, for example, a radio communication unit conforming to the Bluetooth standard can be given.

The Bluetooth standard is a radio communication standard established by a promoter constituted by a plurality of companies which manufacture communication devices, electric devices, software and the like gathering together and by the Bluetooth SIG (Special Interest Group). With the Bluetooth standard, radio communication is executed among a plurality of electronic devices within approximately several meters by utilizing radio signals of a frequency of 2.4 GHz (gigahertz) band.

The electric devices equipped with a radio communication unit conforming to the Bluetooth standard mutually form a group called Piconet. Then, the electric devices which belong to the same Piconet can communicate with each other. Many electric devices can belong in the same Piconet at the same time. Further, one communication apparatus can belong to a plurality of Piconets at the same time. Therefore, it is noted as a transmission method for mutually connecting various devices, such as portable telephone, personal computer, handheld computer called PDA (Personal Digital Assistant), printer, music player and the like.

Hereafter, the radio communication unit 24 is a radio communication unit conforming to the above-described Bluetooth standard, and it will be explained that the radio communication (radio communication through the radio communication link A) carried out by utilizing the radio communication unit 24 and the antenna 25 is executed by electric waves of 2.4 GHz conforming to the Bluetooth standard.

The infrared communication unit 26 houses an encoder, decoder and the like, and is connected to the infrared ray receiving/emitting unit 27. The infrared communication unit 26 converts the signals inputted from the CPU 21 and outputs them to the infrared ray receiving/emitting unit 27.

The infrared ray receiving/emitting unit 27 houses an LED (Light Emitting Diode), photo sensor and the like, makes the built-in LED emit a light on the basis of the signals inputted from the infrared communication unit 26, and outputs the light toward the communication apparatus 3 as infrared signals.

Further, when the infrared ray receiving/emitting unit 27 receives the infrared light from the communication apparatus 3 by the built-in photo sensor, it converts the light-receiving pattern into a predetermined signal and outputs it to the infrared communication unit 26. Moreover, the infrared communication unit 26 converts the signals inputted from the infrared ray receiving/emitting unit 27 and outputs them to the CPU 21.

The interface unit 28 is an interface for connecting the communication apparatus 2 and the external electric devices of the communication apparatus 2, and comprises a connector and the like. Here, as the electric device 4 connected to the interface unit 28, for example, a portable telephone, personal computer, PDA and the like can be given. However, it is not limited particularly. Further, the communication apparatus 2 houses a secondary battery, such as a lithium-ion battery, nickel-cadmium battery or the like, or a dry battery or the like, and is operated by using these batteries as a power source. However, the power source may be supplied to the communication apparatus 2 through the interface unit 28 without housing a battery in the communication apparatus 2.

Moreover, an input device comprising a device connected to the interface unit 28 may be used instead of the input unit 23 provided in the communication apparatus 2. In this case, the CPU 21 may be operated in accordance with the signals inputted from the device connected to the interface unit 28, so that it may not comprise the input unit 23.

Next, the structure of the communication apparatus 3 will be explained.

The communication apparatus 3 comprises a CPU 31, a memory 32, an input unit 33, a radio communication unit 34, an antenna 35, an infrared communication unit 36, an infrared ray receiving/emitting unit 37, and an interface unit 38.

Here, each of the above-described memory 32, input unit 33, radio communication unit 34, antenna 35, infrared communication unit 36, infrared ray receiving/emitting unit 37, and interface unit 38 is the same structure as each of the memory 22, input unit 23, radio communication unit 24, antenna 25, infrared communication unit 26, infrared ray receiving/emitting unit 27, and interface unit 28 provided in the communication apparatus 2, so that their explanation will be omitted.

The CPU 31 reads out the system program stored in the memory 32 to run the program in accordance with the indication operation in the input unit 33, and controls driving of each unit in the communication apparatus 3.

Concretely, the CPU 31 controls the radio communication unit 34 in accordance with the program in the memory 32, and establishes the radio communication link A between the communication apparatus 2 and the communication apparatus 3.

Next, the CPU 31 establishes the infrared communication link B by the infrared communication unit 36 and the infrared ray receiving/emitting unit 37. Then, the CPU 31 receives the infrared signal emitted from the infrared ray receiving/emitting unit 27 provided in the communication apparatus 2 by the infrared ray receiving/emitting unit 37, and receives various information relating to encryption that is transmitted from the communication apparatus 2.

Here, the CPU 31 stores various information transmitted from the communication apparatus 2 in the memory 32, and transmits the information to the communication apparatus 2 through the infrared communication unit 36 and the infrared ray receiving/emitting unit 37. Then, it receives the radio signal outputted from the antenna 25 provided in the communication apparatus 2. When the received signal is requesting disconnection of the radio communication link A and infrared communication link B, the radio communication link A and infrared communication link B between the communication apparatus 2 and the communication apparatus 3 are disconnected.

Next, the operation of the embodiment will be explained.

FIG. 3 is a flowchart showing an operation of the communication system 1 in the first embodiment. In the left side, the operation (S11 to S19) of the access request side apparatus, that is, the communication apparatus 2, is shown, and in the right side, the operation (S21 to S29) of the access reception side apparatus, that is, the communication apparatus 3, is shown. In addition, in the figure, the signals shown by continuous line arrows are radio signals conforming to the above-described Bluetooth standard, which are transmitted and received through the radio communication link A (FIG. 1), and the signals shown by dotted line arrows are infrared signals which are transmitted and received through the infrared communication link B (FIG. 1).

At first, as shown in the left side in FIG. 3, the CPU 21 starts the operation in accordance with the indication input from the input unit 23 to generate a connection request signal for requesting connection to the communication apparatus 3, and transmits the signal to the communication apparatus 3 by the radio communication unit 24 (Step S11).

The CPU 31 starts the operation in accordance with the indication input from the input unit 33 to shift to a state capable of receiving the radio signal transmitted from the communication apparatus 2 by the radio communication unit 34. Then, when the CPU 31 receives the connection request transmitted from the radio communication unit 24 by the radio communication unit 34 (Step S21), it generates a connection confirmation signal used as connection confirmation and transmits it by the radio communication unit 34 (Step S22).

When the CPU 21 receives the connection confirmation signal transmitted from the radio communication unit 34 according to the control of the CPU 31 by the radio communication unit 24 (Step S12), it reads out the transfer item information stored in the transfer item information storage area 102 in the memory 22, and transmits it as an infrared signal to the communication apparatus 3 by the infrared communication unit 26 and the infrared ray receiving/emitting unit 27 (Step S13).

When the CPU 31 receives the transfer item information transmitted as an infrared signal from the infrared communication unit 26 in the communication apparatus 2 by the infrared communication unit 36 (Step S23), it reads out the transfer item information stored in the transfer item information storage area 102 in the memory 32, and transmits it by the infrared communication unit 36 (Step S24).

When the CPU 21 receives the transfer item information transmitted from the communication apparatus 3 by the infrared communication unit 26 (Step S14), it reads out the source encrypted information stored in the source encrypted information storage area 101 in the memory 22, and transmits it to the communication apparatus 3 by the infrared communication unit 26 (Step S15).

When the CPU 31 receives the source encrypted information transmitted from the communication apparatus 2 (Step S25), it stores the received source encrypted information in the source encrypted information storage area 101 in the memory 32 (Step S26). Here, with respect to the source encrypted information stored in the source encrypted information storage area 101 in the memory 32 in advance, it may be overwritten with the newly-received source encrypted information, or it may be stored in an area different from that of the newly-received source encrypted information.

Next, the CPU 31 transmits the source encrypted information received at Step S25 and stored in the source encrypted information storage area 101 in the memory 32 to the communication apparatus 2 by the infrared communication unit 36 (Step S27).

When the CPU 21 receives the source encrypted information transmitted from the communication apparatus 3 (Step S16), it collates the received source encrypted information with the source encrypted information stored in the source encrypted information storage area 101 in the memory 22, and confirms that they match (Step S17).

That is, the CPU 21 confirms that the source encrypted information is transmitted and received in Steps S15, S16, S25 and S26 without any problems by confirming that the source encrypted information transmitted to the communication apparatus 3 at Step S15 matches the source encrypted information transmitted from the communication apparatus 3.

Then, the CPU 21 generates a disconnection request signal for requesting communication disconnection, and transmits it to the communication apparatus 3 by the radio communication unit 24 (Step S18).

When the CPU 31 receives the disconnection request signal transmitted from the communication apparatus 2 by the radio communication unit 34 (Step S28), it generates a disconnection confirmation signal for confirming the reception of the disconnection request, and transmits it to the communication apparatus 2 by the radio communication unit 34 (Step S29) to end the present processing.

Further, when the CPU 21 receives the disconnection confirmation signal transmitted from the communication apparatus 3 by the radio communication unit 24 (Step S19), it ends the present processing.

According to the above processing shown in FIG. 3, the memory 22 provided in the communication apparatus 2 and the memory 32 provided in the communication apparatus 3 become in a state of storing the source encrypted information stored in the source encrypted information storage area 101 in the memory 22 in advance.

In the processing shown in FIG. 3, the transfer item information and the source encrypted information are transmitted and received through the infrared communication link B (FIG. 1).

In general, when executing radio communication according to infrared signals, it is required that the electric devices for executing communication are close to each other and the infrared ray receiving/emitting units provided in the electric devices, respectively, are faced to each other. In particular, the infrared ray receiving/emitting units provided in the electric devices, respectively, must be faced so as to fit into a comparatively narrow solid angle, so that the possibility of interception by irrelevant electric devices is low and the security fears is small.

However, by carrying out the bellow-described encryption, the security reliability in communication through the infrared communication link B can be made more certain.

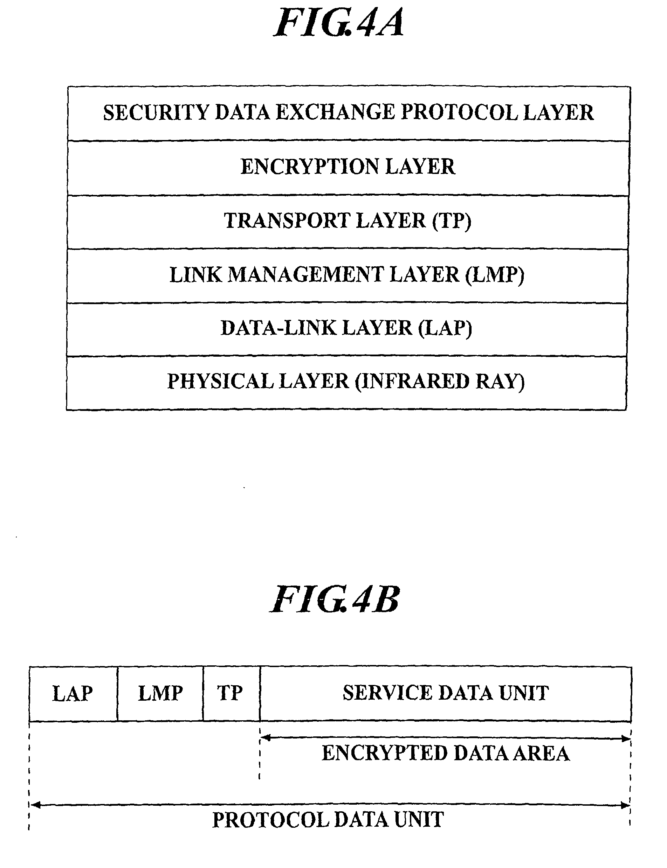

In FIG. 4A, a hierarchical model showing a protocol structure in infrared communication when executing encryption is shown. Further, in FIG. 4B, a structure of a data unit in infrared communication is shown schematically.

In general, in infrared communication, if the compatibility in a data-link layer, a link management layer, and a transport layer is retained, the protocol compatibility can be retained even though the service data units in the hierarchy upper than those layers are encrypted. Therefore, as shown in FIG. 4A, in case that the layer upper than the transport layer is used as a encryption layer, and the layer more upper than the encryption layer is used as a security data exchange protocol layer for exchanging the before-mentioned transfer item information or source encrypted information, the confidentiality of the transferred information can be kept while keeping the protocol compatibility.

Concretely, as shown in FIG. 4B, what is necessary is just to encrypt the service data units following the protocol data units, such as the LAP (data-link layer), LMP (link management layer) and TP (transport layer).

Therefore, in both communication apparatus 2 and communication apparatus 3, by encrypting and decrypting the signals transmitted and received through the infrared communication link B, the confidentiality of the transfer item information or source encrypted information transmitted and received in the processing shown in FIG. 3 can be made more certain.

FIG. 5 is a flowchart showing an operation of the communication apparatus 2 after executing the processing shown in FIG. 3.

In the processing shown in FIG. 5, the communication apparatus 2 operates as a device of Master defined by the Bluetooth standard. Further, the radio signals transmitted and received in the processing shown in FIG. 5 are radio signals of 2.4 GHz band conforming to the Bluetooth standard.

At first, the CPU 21 starts the operation in accordance with the indication inputted from the input unit 23, controls the radio communication unit 24 to carry out the Page Scan operation, and detects a communication apparatus capable of executing communication conforming to the Bluetooth standard (Step S41).

Then, when a connectable communication apparatus is detected, the CPU 21 receives the information transmitted from the detected apparatus in response to the Page Scan operation by the CPU 21 (Step S42), and collates the received information with the source encrypted information stored in the source encrypted information storage area 101 in the memory 22 (Step S43).

Here, when the communication apparatus 2 detects the communication apparatus 3, since the communication apparatus 3 already holds the source encrypted information stored in the source encrypted information storage area 101 in the memory 22, it transmits the information encrypted in accordance with the source encrypted information in response to the Page Scan operation. Further, when a communication apparatus irrelevant to the communication apparatus 2 and the communication apparatus 3 is detected, regular radio signals are transmitted from the irrelevant communication apparatus in response to the Page Scan operation. Therefore, according to the collation in Step S43, it can be judged whether the communication apparatus detected in Step S41 is the communication apparatus 3 or not.

As the result of collation in Step S43, when the radio signals received in Step S42 are irrelevant to the source encrypted information (Step S44; No), the CPU 21 denies the connection with the detected apparatus (Step S45), and ends the present processing.

Further, by collation in Step S43, when the radio signals received in Step S42 match the source encrypted information (Step S44; Yes), the CPU 21 starts transmitting and receiving the radio signals encrypted by the source encrypted information in the source encrypted information storage area 101 (Step S46) with the detected communication apparatus.

In addition, the information encrypted by the source encrypted information stored in the source encrypted information storage area 101 can be decrypted on the basis of the source encrypted information. Therefore, the CPU 21 encrypts the information transmitted by the radio communication unit 24, and decrypts the information received by the radio communication unit24.

Then, the CPU 21 permits to use in application after finishing negotiation with the detected communication apparatus (Step S47).

Thereafter, the CPU 21 carries out the processing of transmitting and receiving the encrypted radio signals in response to the request of the application program carried out by the communication apparatus 2 or the electric device 4 connected to the interface unit 28 (Step S48), and ends the present processing according to the indication input from the input unit 23.

As described above, according to the first embodiment of the present invention, the source encrypted information is transferred between the communication apparatus 2 comprising the radio communication unit 24 and antenna 25 for executing radio communication conforming to the Bluetooth standard, and the infrared communication unit 26 and infrared ray receiving/emitting unit 27 for executing radio communication using infrared signals; and the communication apparatus 3 having the same structure as the communication apparatus 2 by infrared signals in advance. Thereafter, the information encrypted on the basis of the transferred source encrypted information is transmitted and received with radio communication conforming to the Bluetooth standard.

Thereby, highly convenient communication conforming to the Bluetooth standard can be executed while keeping the high confidentiality.

That is, in case of utilizing radio communication conforming to the Bluetooth standard, a Piconet is formed and the communication can be started only by making the communication apparatuses close to each other. Further, each communication device during the communication can form a Piconet among other communication apparatuses at the same time, so that flexible communication can be executed. Moreover, the communication apparatuses for forming a Piconet are only required to be close to each other within a predetermined distance, and it is rare that their positions are restrained. On the other hand, with radio communication conforming to the Bluetooth standard, it is difficult to transmit information only to a specific communication apparatus, so that possibility such that the information will be received mistakenly by an irrelevant communication apparatus cannot be denied.

However, according to the communication system 1 in the above-described first embodiment, the source encrypted information is transferred between the communication apparatus 2 and the communication apparatus 3 by infrared signals in advance. Thereby, the communication apparatus 2 and the communication apparatus 3 share the source encrypted information without affected by irrelevant communication apparatuses, and transmit and receive the information encrypted by using the source encrypted information according to radio communication conforming to the Bluetooth standard. Therefore, highly convenient radio communication can be executed while ensuring security reliability.

In addition, in the above-described embodiment, the communication apparatus 2 and the communication apparatus 3 execute radio communication through the radio communication link A conforming to the Bluetooth standard. However, the present invention is not limited to this. It is applicable to a radio communication method whose specs and standard are disclosed or which is widely spread and its compatibility is retained, and can obtain the same effect as the above-described communication system 1.

Moreover, in case of applying the present invention to various electric devices, such as a portable telephone, PDA, personal computer, printer, music player and the like, it is not limited to the structure such that the electric devices 4 and 5 are connected to the communication apparatus 2 and the communication apparatus 3 as shown in FIG. 1, but it is needless to say that it is possible to house the functions of the communication apparatuses 2 and 3 in the above-described various electric devices.

Further, in the above-described first embodiment, both of the communication apparatus 2 and the communication apparatus 3 are equipped with the input units 23 and 33, respectively, and the processing shown in FIG. 3 is started by indication input from these input units 23 and 33. However, it is not necessary to comprise the input units 23 and 33. Hereafter, with respect to this case will be explained as a second embodiment.

### Second Embodiment:

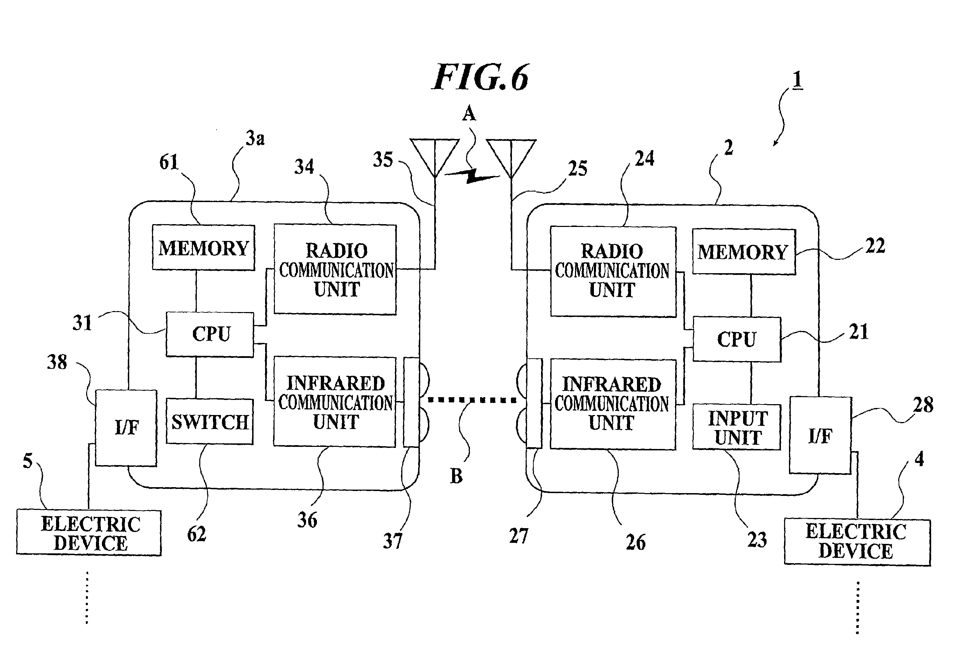

FIG. 6 is a block diagram showing a structure of a communication system 10 in the second embodiment of the present invention.

As shown in FIG. 6, the communication system 10 comprises a communication apparatus 2 and a communication apparatus 3a. The communication system 10 has the same structure as the communication system 1 in the above-described first embodiment except a memory 61 and a switch 62 provided in the communication apparatus 3a. The same reference numerals are given to the common parts and the explanation is omitted.

The switch 62 comprises one or a plurality of switches, and generates operation signals whenever it is operated and outputs the signals to a CPU 31.

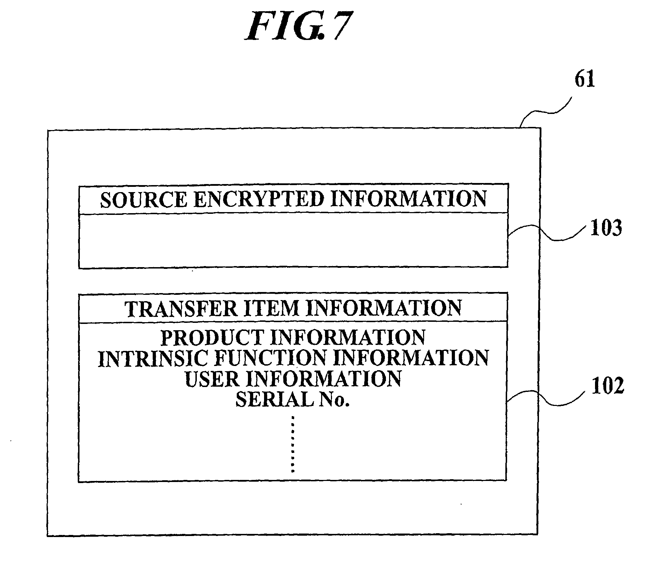

FIG. 7 is a view schematically showing an inner structure of the memory 61. As shown in FIG. 7, in the memory 61, a source encrypted information storage area 103 and a transfer item information storage area 102 are provided. In the transfer item information storage area 102, transfer item information, such as produce information, intrinsic function information, user information, serial No. and the like, are stored. On the other hand, in the source encrypted information storage area 103, source encrypted information are not stored beforehand.

In the communication system 1 explained in the above-described first embodiment, in the processing shown in FIG. 3, the source encrypted information is transferred from the communication apparatus 2 to the communication apparatus 3, and the source encrypted information stored in the source encrypted information storage area 101 in the memory 22 is stored in the source encrypted information storage area 101 in the memory 32.

In the communication system 10 in the second embodiment, when the source encrypted information is transferred from the communication apparatus 2 to the communication apparatus 3a, the transferred source encrypted information is stored in the source encrypted information storage area 103 in the memory 61. Therefore, the communication apparatus 3a can be operated similarly to the above-described communication apparatus 3.

Further, in the communication system 1 explained in the above-described first embodiment, the processing shown in FIG. 3 is started by the indication input from the input unit 23 provided in the communication apparatus 2 and the input unit 33 provided in the communication apparatus 3.

In the communication system 10 in the second embodiment, the processing similar to the processing shown in FIG. 3 is carried out by indication input from the input unit 23 provided in the communication apparatus 2 and by switch operation of the switch 62 provided in the communication apparatus 3a.

That is, although the communication apparatus 3a is an apparatus comprising only the switch 62 as an input section, it is usable as an apparatus for executing only an operation of receiving access from the communication apparatus 2, instead of the communication apparatus 3 in the above-described first embodiment. Further, since no access request side apparatus is used instead of the communication apparatus 2, it is not required to store the source encrypted information in the source encrypted information storage area 103 in the memory 61 in advance.

Therefore, the same effect as in the above-described first embodiment is obtained according to the communication system 10 in the second embodiment by using the communication apparatus 3a only having the input switch 62. Thereby, in radio communication conforming to the Bluetooth standard, the same effect as the communication system 1 can be obtained only by providing a simple switch as an input section in the apparatus functioning only as a device of Slave.

As described above, according to the communication apparatus according to the first aspect of the present invention, the transmitted information can be received only by the communication apparatus which has received the encryption key information transmitted by the second communication section. Thereby, security reliability can be ensured with respect to radio communication by the first communication section. In particular, in case that the radio communication by the first communication section conforms to a radio communication method whose specs and standard are disclosed or which is widely spread and its compatibility is retained, for example, the Bluetooth standard, possibility such that the information will be received by an irrelevant communication apparatus cannot be denied. However, if the present invention is applied, the opponent of communication can be limited only to the communication apparatus which has received the encryption key information transmitted by the second communication section. Accordingly, confidentiality of the information can be kept without damaging the convenience of radio communication, such as the positional relation with the apparatus of communication opponent being comparatively free or the like, and the security reliability can be ensured.

Further, by having a structure such that the transmission and reception of the radio signal by the first communication section are denied by the communication denying section to an external communication apparatus which does not hold encryption key information same as the encryption key information held in the key information holding section, the communication apparatus to become the opponent of communication can be limited strictly, and the secret of information can be kept more certainly.

Moreover, when the first communication section is for transmitting and receiving the radio signal according to a transmission method conforming to the Bluetooth standard, and the second communication section is for transmitting and receiving the radio signal according to a transmission method using an infrared signal, confidentiality of information can be kept in the radio communication in the Bluetooth standard whose specs are disclosed widely and which is rich in convenience, on the other hand, which is difficult to keep information secret certainly. In particular, since the transmission method using an infrared signal is utilized in the second communication section, miniaturization, lightening, lowering cost and power-saving of the second communication section are possible, so that it is easily realizable. Further, in the transmission method using an infrared signal, since it is required that the communication apparatuses come close to each other and face within a predetermined solid angle, the confidentiality of information can be made much higher.

Further, according to the above-described communication system or communication method, the information transmitted by the transmission side apparatus can be received only by the reception side apparatus. Thereby, security reliability can be ensured with respect to radio communication in the communication system using the first communication section provided in the transmission side apparatus. In particular, in case that the radio communication by the first communication section conforms to a radio communication method whose specs and standard are disclosed or which is widely spread and its compatibility is retained, for example, the Bluetooth standard, possibility such that the information will be received by an irrelevant communication apparatus cannot be denied. However, if the present invention is applied, the opponent of communication can be limited only to the reception side apparatus which holds the encryption key information transmitted by the second communication section. Accordingly, confidentiality of the information can be kept without damaging the convenience of radio communication, such as the positional relation with the apparatus of communication opponent being comparatively free or the like, and the security reliability can be ensured.

Further, when the transmission side apparatus denies the transmission and reception of the radio signal by the first communication section according to the communication denying section when encryption key information same as the encryption key information held in the key information holding section is not held in the received key information holding section provided in the reception side apparatus, the communication apparatus to become the opponent of communication can be limited more strictly, and the secret of information can be kept more certainly.

Moreover, when the first communication section provided in the transmission side apparatus and the encrypted information receiving section provided in the reception side apparatus are for transmitting and receiving the radio signal according to a transmission method conforming to the Bluetooth standard, and the second communication section provided in the transmission side apparatus and the key information receiving section provided in the reception side apparatus are for transmitting and receiving the radio signal according to a transmission method using an infrared signal, confidentiality of information can be kept in the radio communication in the Bluetooth standard whose specs are disclosed widely and which is rich in convenience, on the other hand, which is difficult to keep information secret certainly. In particular, since the transmission method using an infrared signal is utilized in the second communication section and the key information receiving section, miniaturization, lightening, lowering cost and power-saving of the second communication section and the key information receiving section are possible, so that it is easily realizable. Further, in the transmission method using an infrared signal, since it is required that the transmission side apparatus and the reception side apparatus come close to each other and face within a predetermined solid angle, the confidentiality of information can be made much higher.

Further, when the key information transmission control section provided in the transmission side apparatus encrypts and transmits the encryption key information by the second communication section, leakage of information when transmitting the encryption key information can be prevented more certainly. Thereby, security reliability can be made much higher.

### Industrial Applicability

The present invention is suitable to use in various communication systems for transmitting and receiving data according to radio communication among a plurality of electronic devices, in particular, to use in communication systems required to retain confidentiality of information and ensure security reliability.

## Claims

1. A communication apparatus comprising:
a first communication section for transmitting and receiving a radio signal;
a second communication section for transmitting and receiving a signal according to a transmission method different from the first communication section;
a key information holding section for holding encryption key information;
a key information transmission control section for transmitting the encryption key information held in the key information holding section to another communication apparatus by the second communication section; and
a communication control section for encrypting information on a basis of the encryption key information held in the key information holding section and for transmitting the information by the first communication section.

2. The communication apparatus as claimed in claim 1, further comprising: a communication denying section for denying the transmission and reception of the radio signal by the first communication section to an external communication apparatus which does not hold encryption key information same as the encryption key information held in the key information holding section.

3. The communication apparatus as claimed in claim 1 or 2, wherein the first communication section is for transmitting and receiving the radio signal according to a transmission method conforming to a Bluetooth standard, and the second communication section is for transmitting and receiving the radio signal according to a transmission method using an infrared signal.

4. The communication apparatus as claimed in claim 3, wherein a protocol data unit in the transmission method using the infrared signal comprises an encrypted service data unit which follows a data-link layer, a link management layer and a transport layer.

5. A communication system comprising a transmission side apparatus and a reception side apparatus,
the transmission side apparatus comprising:
a first communication section for transmitting and receiving a radio signal;
a second communication section for transmitting and receiving a signal according to a transmission method different from the first communication section;
a key information holding section for holding encryption key information;
a key information transmission control section for transmitting the encryption key information held in the key information holding section to the reception side apparatus by the second communication section; and
a communication control section for encrypting information on a basis of the encryption key information held in the key information holding section and for transmitting the information to the reception side apparatus by the first communication section,
the reception side apparatus comprising:
a key information receiving section for receiving the encryption key information transmitted by the second communication section provided in the transmission side apparatus;
a received key information holding section for holding the encryption key information received by the key information receiving section; and
an encrypted information receiving section for receiving the information transmitted by the first communication section provided in the transmission side apparatus.

6. The communication system as claimed in claim 5, wherein the transmission side apparatus further comprises a communication denying section for denying the transmission and reception of the radio signal by the first communication section when encryption key information same as the encryption key information held in the key information holding section is not held in the received key information holding section provided in the reception side apparatus.

7. The communication system as claimed in claim 5 or 6, wherein the first communication section provided in the transmission side apparatus and the encrypted information receiving section provided in the reception side apparatus are for transmitting and receiving the radio signal according to a transmission method conforming to a Bluetooth standard, and
the second communication section provided in the transmission side apparatus and the key information receiving section provided in the reception side apparatus are for transmitting and receiving the radio signal according to a transmission method using an infrared signal.

8. The communication system as claimed in claim 5 or 6, wherein the key information transmission control section provided in the transmission side apparatus encrypts and transmits the encryption key information by the second communication section.

9. A communication method in a communication system comprising: a transmission side apparatus having a first communication section for transmitting and receiving a radio signal, and a second communication section for transmitting and receiving a signal according to a transmission method different from the first communication section; and a reception side apparatus, comprising:
transmitting encryption key information to the reception side apparatus by the second communication section, according to the transmission side apparatus;
receiving and storing the encryption key information transmitted by the second communication section provided in the transmission side apparatus, according to the reception side apparatus; and
encrypting information on a basis of the encryption key information and transmitting the information to the reception side apparatus by the first communication section, according to the transmission side apparatus.
